# EUROPEAN PATENT APPLICATION

(11) **EP 1 608 201 A1**
(43) Date of publication of application: **21.12.2005**
(21) Application number: 04291497.8
(22) Date of filing: 15.06.2004
(51) Int. Cl.: H04Q 11/04, H04L 12/413, H04M 11/06

(54) **Positioning of network processor in a packet based access multiplexer**

(71) Applicant: ALCATEL, 75008 Paris (FR)
(72) Inventor: Gyselings, Tim, 2100 Deurne (BE); Renaux, Patrick Albert Paul, 1050 Brussels (BE); Cautereels, Paull, 2880 Hingene (BE); Kiss, Lajos, 2610 Wilrijk (BE); Peeters, Ronny Jozef Leon, 2020 Antwerp (BE); Audenaert, Serge Maurits, 9190 Stekene (BE); Pauwels, Ludwig Alice Julienne, 9120 Beveren (BE)
(74) Representative: Plas, Axel Ivo Michel

(57) **Abstract**

A packet based access multiplexer (DSLAM2) comprising an Ethernet switch (E-SWITCH2) and a single network processor (NP2) adapted to process at least part of incoming packets. The single network processor (NP2) is parallel coupled to the Ethernet switch (E-SWITCH2) in an architecture suited to process part of the packets, or alternatively is cascade coupled to the Ethernet switch in an architecture suited to process all packets.

## Description

The present invention relates to next generation access multiplexers which are packet based and incorporate an Ethernet switch.

Access multiplexers like Digital Subscriber Line Access Multiplexers (DSLAMs) are undergoing a significant change. Instead of being based on an Asynchronous Transfer Mode (ATM) switch offering basic data services to subscribers, next generation DSLAMs will be able to handle link layer protocols such as Ethernet, Frame Relay, Multi-Protocol Label Switching (MPLS), Internet Protocol (IP), and thus at least shall incorporate an Ethernet switch. Intel's whitepaper "Chapter 12: *DSL Access Multiplexer - Multi-service DSLAM with IP*, *ATM, MPLS and Frame Relay Support*" *downloadable via the URL "http:*//*www.intel.com*/*design*/*network*/*solutions*/*manual*/*Chapter12.pdf*" for instance describes possible architectures for such a next generation packet-based DSLAM. In particular the positioning of network processors (like the Intel IXP2400) implementing functions like packet inspection, protocol conversions and traffic management, is discussed in the Intel whitepaper. In the known DSLAM with centralized processing architecture depicted in Figure 12-1 and Figure 12-3 of the Intel publication, two network processors are used to implement all packet processing functions. The network processors are positioned at both sides of the Ethernet switch. In an alternate, known DSLAM with distributed processing architecture, depicted in Figure 12-2 of the above cited Intel publication, a network processor is put on every DSL line card in the DSLAM. Thus, at least two network processors are required in known next generation, packet based access multiplexers.

An object of the present invention is to simplify the architecture and development cost of next generation, packet based access multiplexers.

According to the present invention, this object is realized by the packet based access multiplexer defined by claim 1.

Indeed, according to our invention only one network processors is used instead of at least two in the known architectures. This is possible because new Ethernet switches like Broadcom's 5695 or Marvell's MX family have additional functionality (e.g. packet header inspection, packet filtering, policing to eventually drop non-conform packets, etc.) such that a network processor in front of the Ethernet switch is no longer mandatory. The position of the single network processor vis-à-vis the Ethernet switch is dependent on the functionality required in the network processor. Two possible architectures, the parallel and the cascaded architecture, can be considered, each with other advantages and disadvantages.

An optional feature of the packet based access multiplexer according to the present invention is defined by claim 2.

Thus, in a first possible architecture the single network processor is positioned in parallel to the Ethernet Switch. This architecture is most suited in case not all packets have to pass through the network processor. In that case the network processor does not have to operate at wire speed for all traffic. In this parallel architecture, the interface between the Ethernet switch and single network processor needs to have a capacity that is at least twice the network processor capacity, but this could still be reasonable because not all traffic has to go to the network processor. This parallel architecture is most suited for a case in which the total traffic is dominated by multicast / broadcast traffic such as video. Typically the volume of this traffic is high so a lot of processing power is saved by not passing all multicast / broadcast traffic through the network processor.

An alternate optional feature of the packet based access multiplexer according to the present invention is defined by claim 3.

Indeed, in case the Point-to-Point Protocol (PPP) for instance has to be terminated on the access multiplexer, the parallel architecture is less favourable because all packets have to pass through the network processor, putting a load on the interface between the Ethernet switch and network processor and on the network processor itself. In this case the interface between Ethernet switch and network processor would need to have a capacity that equals twice the wire-rate bandwidth. The alternate cascaded architecture wherein the single network processor is put in cascade to the Ethernet switch is more suited for this application. All packets pass both the Ethernet switch and the network processor. The interface between Ethernet switch and network processor has to carry wire rate traffic, reducing the bandwidth requirements of the Ethernet switch as compared to the parallel architecture.

Other optional features of the access multiplexer according to the current invention are defined in claims 4 to 8.

Indeed, the single network processor according to the present invention may perform a subset of protocol conversion and/or traffic management related functions such as for example Service Level Agreement (SLA) control, Point-to-Point Protocol (PPP) termination, Internet Group Management Protocol (IGMP) snooping, Quality of Service (QoS) support, ...

Further optional features of the access multiplexer according to the present invention are defined in claims 8 to 10.

Thus, the access multiplexer might for instance be a Digital Subscriber Line Access Multiplexer (DSLAM) adapted to serve as central office equipment for ADSL- or VDSL-like services, or an Optical Line Terminator (OLT) adapted to serve as central office equipment for PON-based access services. Alternatively, the access multiplexer can be a Digital Loop Carrier (DLC) or any other access aggregating device that multiplexes a plurality of subscriber lines towards an aggregation network.

The above mentioned and other objects and features of the invention will become more apparent and the invention itself will be best understood by referring to the following description of embodiments of the invention taken in conjunction with the accompanying drawings wherein:
Fig. 1 shows a next generation Digital Subscriber Line Access Multiplexer architecture according to the prior art;
Fig. 2 depicts a first embodiment of the next generation Digital Subscriber Line Access Multiplexer architecture according to the present invention; and
Fig. 3 depicts a second embodiment of the next generation Digital Subscriber Line Access Multiplexer architecture according to the present invention.

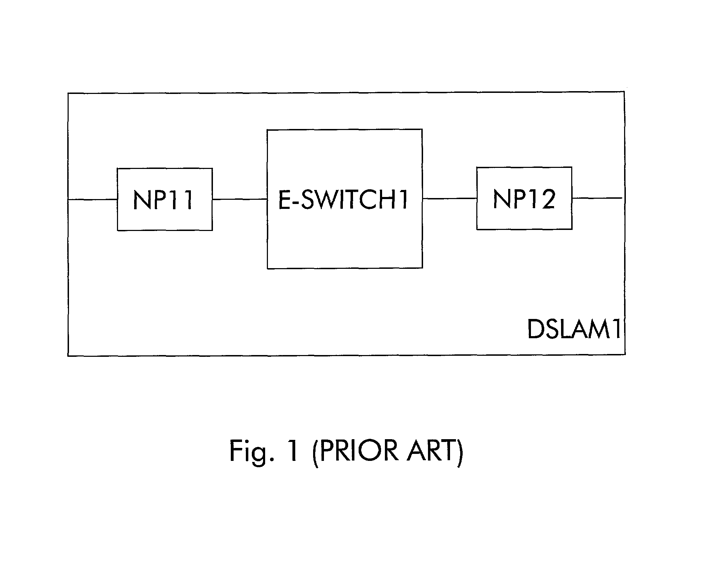

In the prior art packet-based DSLAM architecture depicted in Fig. 1, a first network processor NP11, an Ethernet switch E-SWITCH1 and a second network processor NP12 are cascaded. The Ethernet switch E-SWITCH1 has no or limited packet processing functionality, like for instance Marvell's DX family. The network processors NP11 and NP12 can be implemented by Intel's IXP2400. Note that Fig. 1 only shows the components of the central processing card. In addition to the central processing card, DSLAM1 obviously also contains a number of DSL line cards. The network processors NP11 and NP12 both run software for processing packets from the subscriber or WAN ports. The network processors perform protocol conversions and traffic shaping, NP11 performs the receive processing whereas NP12 performs the transmit processing. The receive processor NP11 inspects the packets to determine the connection type (for instance: ATM, Ethernet, Frame Relay), validates the packet based on customer defined criteria and performs protocol conversion. Network processor NP11 in other words performs PPP (Point-to-Point Protocol) termination, encapsulates/decapsulates the data units using any type of header, and inserts/extracts labels (e.g. MPLS labels). Eventually, certain receive traffic management related functions are carried out by NP11, like packet header inspection (Ethernet header inspection, VLAN-ID inspection, ...), packet filtering (indicating when a header field does not match), and policing (determining when a packet has to be dropped because of its non-conformance). The transmit processor NP12 performs transmit traffic management related functions like traffic shaping in order to comply with the different service classes (CBR, UBR, VBR, ABR) and contractual requirements such as the Peak Cell Rate (PCR), Sustainable Cell Rate (SCR), ... The transmit processor NP12 in other words manages the different rates and service levels specified in the service contracts. In Fig. 1, all traffic from the subscriber side and the WAN side passes through the network processors NP11 and NP12 and the Ethernet switch E-SWITCH1. The interfaces NP11/ E-SWITCH1 and E-SWITCHI/NP12 operate at wire rate. Typically, the network processors NP11 and NP12 are equipped with 1 à 2 Gig SPI interfaces whereas the Ethernet switch E-SWITCH1 is equipped with a GMII interface such that some glue logic might be required to perform the necessary conversions on the interfaces between network processor and Ethernet switch.

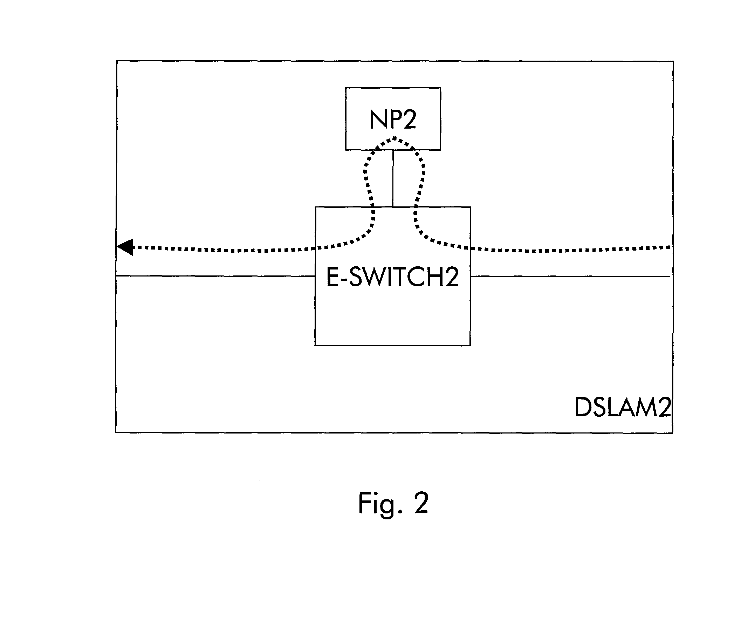

Fig. 2 shows a packet-based DSLAM according to the invention wherein a single network processor NP2 is parallel coupled to an Ethernet switch E-SWITCH2 on the central processing card. The Ethernet switch E-SWITCH2 has extensive packet processing capabilities, like for example Broadcom's 5695 or Marvell's MX family. Again, DSLAM2 in addition to the central processing card, is equipped with several DSL line cards not shown in Fig. 2. The Ethernet switch E-SWITCH2 will pass only a fraction of the incoming packets to the network processor NP2 and is capable to perform certain receive traffic management functions such as packet filtering and policing. This architecture is suitable in case DSLAM2 has to handle a lot of multicast / broadcast traffic which does not have to be processed in its entirety. The network processor NP2 and the interface E-SWITCH2/NP2 do not have to operate at wire-speed.

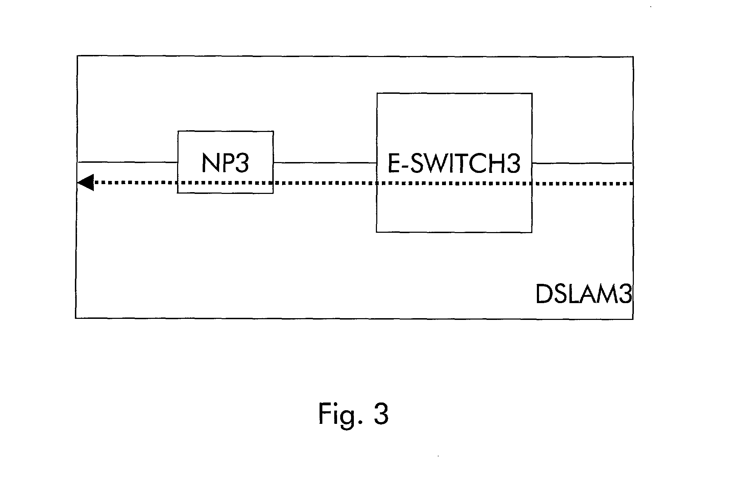

Fig. 3 shows a second embodiment of the packet-based DSLAM according to the present invention wherein a single network processor NP3 and an Ethernet switch E-SWITCH3 are cascaded on the central processing card. E-SWITCH3 also has extensive packet processing capabilities and can for instance be implemented by Broadcom's 5695 or Marvell's MX switch. Also in Fig. 3, the line cards that form part of DSLAM3 are not shown. In DSLAM3 all packets pass through the network processor NP3 putting a wire rate load on the interface E-SWITCH3/NP3. Typically, the network processor NP3 will be equipped with an SPI interface that can operate at speeds of 2.5 Gig up to 10 Gig. This cascade architecture is most suited when mostly peer-to-peer packets pass through DSLAM3 which all have to be terminated on the network processor NP3, e.g. for services like gaming, etc.

The DSLAM architecture according to the present invention enables a cost and complexity reduction for the DSLAM manufacturer because only a single network processor is required. This has become possible because new Ethernet switches like E-SWITCH2 and E-SWITCH3 have additional functionality integrated (like filtering, policing) such that receive processing by a network processor is no longer mandatory. The position of the single network processor compared to the Ethernet switch is dependent on the type of traffic handled by the DSLAM and the functionality required from the network processor. Two possible architectures, the parallel one and the cascaded one, each have their advantages and disadvantages as explained above.

Although reference was made above to DSL (Digital Subscriber Line technology used for transmission over twisted pair telephone lines), any skilled person will appreciate that the present invention can be applied with same advantages in a cable based, a fiber based or a radio based access system, where a packet-based access multiplexer aggregates the traffic from and to a substantial amount of access subscribers. Thus the access multiplexer could alternatively be a PON OLT (Passive Optical Network Line Termination), a mini-DSLAM or fiber-fed remote cabinet serving a smaller amount of ADSL or VDSL subscribers, a DLC (Digital Loop Carrier), etc.

Furthermore, it is remarked that an embodiment of the present invention is described above rather in functional terms. From the functional description, it will be obvious for a person skilled in the art of designing hardware and/or software solutions for networks how embodiments of the invention can be manufactured.

While the principles of the invention have been described above in connection with specific apparatus, it is to be clearly understood that this description is made only by way of example and not as a limitation on the scope of the claims.

## Claims

1. Packet based access multiplexer (DSLAM2) for coupling multiple subscriber terminals to an aggregation network, said packet based access multiplexer (DSLAM2) comprising an Ethernet switch (E-SWITCH2),
**CHARACTERIZED IN THAT** said packet based access multiplexer (DSLAM2) further contains a single network processor (NP2) adapted to process at least part of incoming packets.

2. Packet based access multiplexer (DSLAM2) according to claim 1,
**CHARACTERIZED IN THAT** said single network processor (NP2) is parallel coupled to said Ethernet switch (E-SWITCH2).

3. Packet based access multiplexer according to claim 1,
**CHARACTERIZED IN THAT** said single network processor is cascade coupled to said Ethernet switch.

4. Packet based access multiplexer (DSLAM2) according to claim 1,
**CHARACTERIZED IN THAT** said single network processor (NP2) is adapted to perform Service Level Agreement (SLA) control.

5. Packet based access multiplexer (DSLAM2) according to claim 1,
**CHARACTERIZED IN THAT** said single network processor (NP2) is adapted to perform Point-to-Point Protocol (PPP) termination.

6. Packet based access multiplexer (DSLAM2) according to claim 1,
**CHARACTERIZED IN THAT** said single network processor (NP2) is adapted to perform Internet Group Management Protocol (IGMP) snooping.

7. Packet based access multiplexer (DSLAM2) according to claim 1,
**CHARACTERIZED IN THAT** said single network processor (NP2) is adapted to perform Quality of Service (QoS) support.

8. Packet based access multiplexer (DSLAM2) according to claim 1,
**CHARACTERIZED IN THAT** said packet based access multiplexer (DSLAM2) is a Digital Subscriber Line Access Multiplexer.

9. Packet based access multiplexer according to claim 1,
**CHARACTERIZED IN THAT** said packet based access multiplexer is an Optical Line Terminator.

10. Packet based access multiplexer according to claim 1,
**CHARACTERIZED IN THAT** said packet based access multiplexer is a Digital Loop Carrier.
